# EUROPEAN PATENT APPLICATION

(11) **EP 2 993 796 A2**
(43) Date of publication of application: **09.03.2016**
(21) Application number: 15183567.5
(22) Date of filing: 02.09.2015
(51) Int. Cl.: H04B 1/00, H04W 72/04, H04W 36/06

(54) **COMMUNICATION CHANNEL MANAGEMENT METHOD AND ELECTRONIC DEVICE SUPPORTING THE SAME**

(30) Priority: 02.09.2014 KR 20140116507
(71) Applicant: Samsung Electronics Co., Ltd., Gyeonggi-do 16677 (KR)
(72) Inventor: CHOI, Jong Mu, 13560 Gyeonggi-do (KR); KWON, Keum Youn, 16582 Gyeonggi-do (KR); CHO, Ki Ho, 16974 Gyeonggi-do (KR); LEE, Ju Ah, 16546 Gyeonggi-do (KR); PARK, Jong Ho, 14070 Gyeonggi-do (KR); CHOI, Young Jae, 16543 Gyeonggi-do (KR)
(74) Representative: Jenkins, Richard Gavin

(57) **Abstract**

An electronic device and a communication channel management method are provided. The electronic device includes a communication interface including a plurality of communication modules or configured to support a plurality of channel bands in one communication module, and a processor configured to establish a second communication channel based on another frequency band that an access point supports according to a specified condition if another frequency band connection of the same access point is available when establishing a first communication channel with the access point based on a specified frequency band.

## Description

### PRIORITY

This application claims priority to Korean patent application filed on September 2, 2014 in the Korean Intellectual Property Office and assigned Serial number 10-2014-0116507, the entire disclosure of which is hereby incorporated by reference.

### BACKGROUND OF THE INVENTION

### 1. Field of the Invention

The present disclosure relates to a communication channel management of an electronic device.

### 2. Background of the Invention

An electronic device, such as a smartphone, includes at least one communication module and provides a communication function. For example, the electronic device of the related art includes a wireless communication module and based on this, supports a wireless communication function.

The above electronic device of the related art may support a communication function through a base station or an access point while providing a wireless communication function. However, even when it is possible for the electronic device of the related art to be switched into a channel providing better communication environments, if the currently connected communication channel is not terminated, channel switching is not accomplished.

Therefore, a need exists for a communication channel management method for allowing improved communication channels (or relatively high communication qualities) based on a found communication environment.

It is an aim of certain embodiments of the invention to solve, mitigate or obviate, at least partly, at least one of the problems and/or disadvantages associated with the prior art. Certain embodiments aim to provide at least one of the advantages described below.

The above information is presented as background information only to assist with an understanding of the present disclosure. No determination has been made, and no assertion is made, as to whether any of the above might be applicable as prior art with regard to the present disclosure.

### SUMMARY OF THE INVENTION

Aspects of the present disclosure are to address at least the above-mentioned problems and/or disadvantages and to provide at least the advantages described below. Accordingly, an aspect of the present disclosure is to provide a communication channel management method for allowing improved communication channels (or relatively high communication qualities) based on a found communication environment.

In accordance with an aspect of the present disclosure, an electronic device is provided. The electronic device includes a communication interface including a plurality of communication modules or a communications interface configured to support a plurality of channel bands (i.e. frequency bands) in one communication module, and a processor configured to establish a second communication channel, based on another (i.e. a different) frequency band that an access point supports, according to (i.e. dependent on) a specified condition if another frequency band connection of the same access point is available when (or in a state of) establishing, or when connected through or having established a first communication channel with the access point based on a specified frequency band.

According to various embodiments, the processor is further configured to establish the second communication channel after the data transmission based on the first communications channel is completed.

According to various embodiments, the processor is further configured to change the first communication channel of a relatively low frequency band (2.4 GHz for example) into the second communication channel of a relatively high frequency band (5 GHz or 60 GHz for example), or establish the first communication channel, in a state of the second communication channel of the relatively high frequency band is connected, if a performance of the second communication channel does not satisfy the specified condition.

According to various embodiments, the processor is further configured to establish a second communication channel based on a 5 GHz or 60 GHz band (i.e. bands including but not limited to 5 GHz and 60 GHz frequencies) in a state of establishing a 2.4 GHz band (i.e. bands including but not limited to 2.4 GHz frequencies) based first communication channel, or establish a first communication channel based on the 2.4 GHz band in correspondence to whether the specified condition is satisfied in a state of establishing a second communication channel based on the 5 GHz or 60GHz band.

According to various embodiments, the processor is further configured to determine whether a wireless signal reception intensity of the other frequency band satisfies the specified condition, establish, when the specified condition is satisfied, the second communication channel, maintain, when the specified condition is not satisfied, the first communication channel, establish or maintain, while the second communication channel is established, if the second communication channel does not satisfy the specified condition and the first communication channel satisfies the specified condition, the first communication channel, and maintain, when the first communication channel does not satisfy the specified condition, the second communication channel.

According to various embodiments, by comparing identification information of an access point establishing the first communication channel and identification information of a found access point of another frequency band, the processor is further configured to determine whether the access points are the same access point.

In accordance with another aspect of the present disclosure, a communication channel management method is provided. The method includes establishing a first communication channel with an access point based on a specified frequency band, and establishing a second communication channel based on another frequency band that the access point supports according to (i.e. dependent on) a specified condition when another frequency band of the same access point is connectible when (or in a state of) establishing or when connected through or having established the first communication channel.

According to various embodiments, the establishing of the second communication channel comprises: establishing a second communication channel associated with a 5 GHz or 60 GHz band in a state of establishing the first communication channel associated with 2.4 GHz band, or establishing the first communication channel based on a 2.4 GHz band in a state of establishing the second communication channel based on a 5 GHz or 60GHz band.

According to various embodiments the method further comprises outputting at least one of: notification information corresponding to the first communication channel establishment; notification information corresponding to the second communication channel establishment; notification information corresponding to switching from the first communication channel to the second communication channel; notification information corresponding to switching from the second communication channel to the first communication channel; or notification information corresponding to switching from the second communication channel to the first communication channel.

According to various embodiments, the method further comprises outputting at least one of: an indicator corresponding to the first communication channel establishment; an indicator corresponding to the second communication channel establishment; an indicator corresponding to switching from the first communication channel to the second communication channel; an indicator corresponding to switching from the second communication channel to the first communication channel; or an indicator corresponding to switching from the second communication channel to the first communication channel.

According to various embodiments the method further comprises establishing, when a wireless signal reception intensity of the other frequency band satisfies the specified condition, the second communication channel, and maintaining, when the specified condition is not satisfied, the first communication channel; or establishing or maintaining, while the second communication channel is established, if the second communication channel does not satisfy the specified condition and the first communication channel satisfies the specified condition, the first communication channel, and maintaining, when the first communication channel does not satisfy the specified condition, the second communication channel.

According to various embodiments the method further comprises determining, by comparing identification information of an access point establishing the first communication channel and identification information of an access point of another frequency band, whether the access points are the same access point.

According to various embodiments, the method further comprises determining, when at least one of a media access control (MAC) address and a service set identifier (SSID) value of the access point and at least one of a MAC address and an SSID value of the access point of another frequency band have a similarity ratio of a specified value, the access points as the same access point.

According to various embodiments, the method further comprises maintaining the first communication channel when another frequency band of an access point is found.

In accordance with another aspect of the present disclosure, a communication channel management method is provided. The method includes establishing a first communication channel with an access point based on a specified frequency band, and determining, when at least one of a media access control (MAC) address and a service set identifier (SSID) value of the access point and at least one of a MAC address and an SSID value of the access point of another frequency band have a similarity ratio of a specified value, the access points as the same access point and establishing a second communication channel based on another frequency band that the same access point supports.

Another aspect of the invention provides a computer program comprising instructions arranged, when executed, to implement a method and/or apparatus in accordance with any one of the above-described aspects. A further aspect provides machine-readable storage storing such a program.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a view illustrating a communication channel management environment according to various embodiments of the present disclosure;
FIG. 2 is a view illustrating an electronic device management environment according to various embodiments of the present disclosure;
FIG. 3 is a view illustrating a program module according to various embodiments of the present disclosure;
FIG. 4 is a flowchart illustrating a communication channel management method according to various embodiments of the present disclosure;
FIG. 5 is a flowchart illustrating a communication channel switching method according to various embodiments of the present disclosure;
FIG. 6 is a flowchart illustrating a wireless-fidelity (Wi-Fi) communication management method according to various embodiments of the present disclosure;
FIG. 7 is a view illustrating a communication channel management related screen interface according to various embodiments of the present disclosure;
FIG. 8 is a view illustrating an electronic device relating to a communication channel management according to various embodiments of the present disclosure; and
FIG. 9 is a block diagram illustrating a program module according to various embodiments of the present disclosure.

Throughout the drawings, it should be noted that like reference numbers are used to depict the same or similar elements, features, and structures.

### DETAILED DESCRIPTION OF EMBODIMENTS OF THE PRESENT INVENTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

The term "include," "comprise," and "have", or "may include," or "may comprise" and "may have" used herein indicates disclosed functions, operations, or existence of elements but does not exclude other functions, operations or elements.

For instance, the expression "A or B", or "at least one of A or/and B" may indicate include A, B, or both A and B. For instance, the expression "A or B", or "at least one of A or/and B" may indicate (1) at least one A, (2) at least one B, or (3) both at least one A and at least one B.

The terms, such as "1st," "2nd," "first," "second," and the like, used herein may refer to modifying various different elements of various embodiments of the present disclosure, but do not limit the elements. The expressions may be used to distinguish one element from another element. For instance, "a first user device" and "a second user device" may indicate different users regardless of the order or the importance. For example, a first component may be referred to as a second component and vice versa without departing from the scope of the present disclosure.

In various embodiments of the present disclosure, it will be understood that when a component (for example, a first component) is referred to as being "(operatively or communicatively) coupled with/to" or "connected to" another component (for example, a second component), the component can be directly connected to the other component or connected through another component (for example, a third component). In various embodiments of the present disclosure, it will be understood that when a component (for example, a first component) is referred to as being "directly connected to" or "directly access" another component (for example, a second component), another component (for example, a third component) does not exist between the component (for example, the first component) and the other component (for example, the second component).

The expression "configured to" used in various embodiments of the present disclosure may be interchangeably used with "suitable for", "having the capacity to", "designed to", "adapted to", "made to", or "capable of" according to a situation, for example. The term "configured to" may not necessarily mean "specifically designed to" in terms of hardware. Instead, the expression "a device configured to" in some situations may mean that the device and another device or part are "capable of". For example, "a processor configured to perform A, B, and C" in a phrase may mean a dedicated processor (for example, an embedded processor) for performing a corresponding operation or a generic-purpose processor (for example, a central processing unit (CPU) or application processor (AP)) for performing corresponding operations by executing at least one software program stored in a memory device.

Terms used in various embodiments of the present disclosure are used to describe specific embodiments of the present disclosure, and are not intended to limit the scope of other embodiments. Unless otherwise indicated herein, all the terms used herein, which include technical or scientific terms, may have the same meaning that is generally understood by a person skilled in the art. In general, the terms defined in the dictionary should be considered to have the same meaning as the contextual meaning of the related art, and, unless clearly defined herein, should not be understood abnormally or as having an excessively formal meaning. In any cases, even the terms defined in this specification cannot be interpreted as excluding embodiments of the present disclosure.

According to various embodiments of the present disclosure, electronic devices may include at least one of smartphones, tablet personal computers (PCs), mobile phones, video phones, electronic book (e-book) readers, desktop PCs, laptop PCs, netbook computers, workstation server, personal digital assistants (PDAs), portable multimedia players (PMPs), moving picture experts group (MPEG-1 or MPEG-2) audio layer 3 (MP3) players, mobile medical devices, cameras, and wearable devices (for example, smart glasses, head-mounted-devices (HMDs), electronic apparel, electronic bracelets, electronic necklaces, electronic appcessories, electronic tattoos, smart mirrors, and smart watches).

According to various embodiments of the present disclosure, an electronic device may be smart home appliances. The smart home appliances may include at least one of, for example, televisions (TVs), digital versatile disc (DVD) players, audios, refrigerators, air conditioners, cleaners, ovens, microwave ovens, washing machines, air cleaners, set-top boxes, home automation control panels, security control panels, TV boxes (for example, Samsung HomeSync™, Apple TV™ or Google TV™), game consoles (for example, Xbox™ and PlayStation™), electronic dictionaries, electronic keys, camcorders, and electronic picture frames.

According to various embodiments of the present disclosure, an electronic device may include at least one of various medical devices supporting call forwarding service (for example, various portable measurement devices (for example, glucometers, heart rate meters, blood pressure meters, temperature meters, and the like), magnetic resonance angiography (MRA) devices, magnetic resonance imaging (MRI) devices, computed tomography (CT) devices, medical imaging devices, ultrasonic devices, and the like), navigation devices, global positioning system (GPS) receivers, event data recorders (EDRs), flight data recorders (FDRs), vehicle infotainment devices, marine electronic equipment (for example, marine navigation systems, gyro compasses, and the like), avionics, security equipment, vehicle head units, industrial or household robots, financial institutions' automatic teller's machines (ATMs), or stores' point of sales (POS) or Internet of things (IoT) (for example, bulbs, various sensors, electric or gas meters, sprinkler systems, fire alarms, thermostats, street lights, toasters, exercise equipment, hot water tanks, heaters, boilers, and the like).

In various embodiments of the present disclosure, an electronic device may include at least one of part of furniture or buildings/structures supporting call forwarding service, electronic boards, electronic signature receiving devices, projectors, and various measuring instruments (for example, water, electricity, gas, or radio signal measuring instruments). An electronic device according to various embodiments of the present disclosure may be one of the above-mentioned various devices or a combination thereof. Additionally, an electronic device according to an embodiment of the present disclosure may be a flexible electronic device. Additionally, an electronic device according to an embodiment of the present disclosure is not limited to the above-mentioned devices and may include a new kind of an electronic device according to the technology development.

Hereinafter, an electronic device according to various embodiments of the present disclosure will be described with reference to the accompanying drawings. The term "user" in this disclosure may refer to a person using an electronic device or a device using an electronic device (for example, an artificial intelligent electronic device).

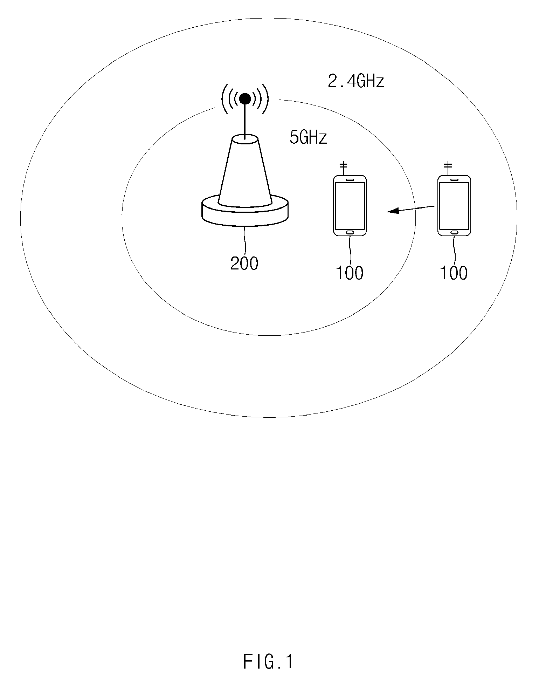

FIG. 1 is a view illustrating a communication channel management environment according to various embodiments of the present disclosure.

Referring to FIG. 1, the communication channel management environment may include an access point 200 and an electronic device 100.

The access point 200 may support a communication with a computer network (for example, local area network (LAN) or wide area network (WAN)). The access point 200 may include a hardware interface for supporting a plurality of frequency bands. For example, the access point 200 may include a first hardware interface (for example, a 2.4 GHz supporting Wi-Fi communication module) for supporting a first frequency band (for example, 2.4 GHz band) and a second hardware interface (for example, a 5 GHz and 60 GHz supporting Wi-Fi communication module) for supporting a second frequency band (for example, 5 GHz and 60 GHz different from the frequency band of the first hardware interface). According to various embodiments of the present disclosure, the access point 200 may include at least one hardware interface for supporting 800MHz, 900Hz, and TV white space (TVWS). Correspondingly, the electronic device 100 may include at least one communication module for establishing a communication channel with at least one hardware interface of the access point 200.

Each hardware interface of the access point 200 may include unique identification information (for example, media access control (MAC) address information or service set identifier (SSID) information). The first frequency band may provide a relatively wide communication available range in comparison to the second frequency band. When the electronic device 100 approaches a communication available range that the first frequency band or the second frequency band supports, the access point 200 may establish a communication channel (for example, a Wi-Fi communication channel) with the electronic device 100 automatically in correspondence to a request of the electronic device 100 or according to a setting.

According to an embodiment of the present disclosure, the access point 200 may establish a 2.4 GHz Wi-Fi communication channel with the electronic device 100 that enters a communication available range of the first frequency band. According to an embodiment of the present disclosure, the access point 200 may establish a 5GHz Wi-Fi communication channel with the electronic device 100 that enters a communication available range of the second frequency band. According to an embodiment of the present disclosure, after the electronic device 100 establishing a Wi-Fi communication channel in the first frequency band enters a communication available range of the second frequency band, the access point 200 may receive a communication channel establishment request based on the second frequency band. Upon the receipt of the request, the access point 200 may switch a communication channel with the electronic device 100. For example, the access point 200 may establish a second frequency band based Wi-Fi communication channel. During this operation, the access point 200 may determine the identification information of the electronic device 100 and support seamless data communication by transmitting communication data, which is received/transmitted from/to the electronic device 100 based on the first frequency band, through the second frequency band based communication channel.

The electronic device 100 may include a communication module (for example, a Wi-Fi communication module) that the access point 200 provides. The electronic device 100 may enter a communication available range of the access point 200 while turning on a communication module according to a user's management or may turn on a communication module after entering a communication available range of the access point 200 according to a user's management. After entering the communication available range, the electronic device 100 may perform a surrounding search according to the communication module activation. The electronic device 100 may establish a communication channel with the found access point 200.

According to various embodiments of the present disclosure, the electronic device 100 enters the first frequency band that the access point 200 provides, thereby establishing a first frequency band based communication channel (for example, a 2.4 GHz band communication channel). The electronic device 100 may perform a surrounding search in certain periods or in real time while being connected to the access point 200 based on the first frequency band. When finding a second frequency band connection available access point, the electronic device 100 may determine the access point 200 based on access point related information (for example, at least one of the MAC address information of the access point 200 and the SSID of the access point 200). When the access point 200 is the same access point supporting the first frequency band, the electronic device 100 may perform a second frequency band based communication channel establishment. For example, the electronic device 100 may request a second frequency band based communication channel establishment from the access point 200. When the access point 200 is capable of supporting the second frequency band, the electronic device 100 may receive an allocated communication channel of the second frequency band from the access point 200 and may seamlessly receive and process communication data transmission/reception, which is performed based on the first frequency band, based on the second frequency band.

According to various embodiments of the present disclosure, even when the electronic device 100 and the access point 200 are connected to the second frequency band, if the performance of the second frequency band is less than that of the first frequency band, the electronic device 100 may establish a first frequency band based communication channel or maintain the second frequency band.

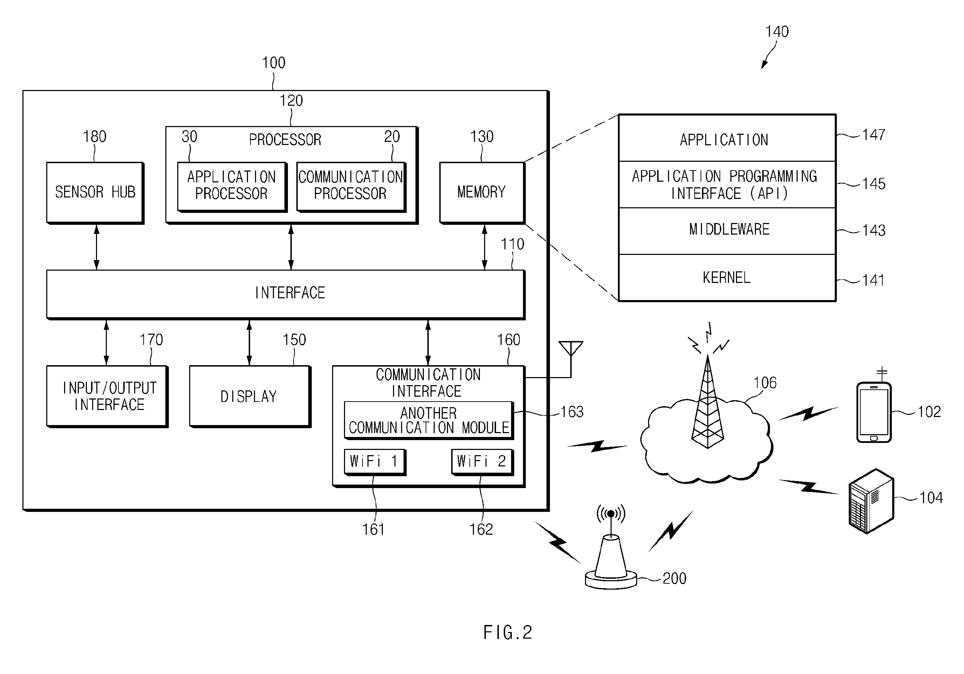

FIG. 2 is a view illustrating an electronic device management environment according to various embodiments of the present disclosure.

Referring to FIG. 2, the electronic device management environment may include an electronic device 100, an access point 200, a network 106, an external electronic device 102, and a server 104.

In the electronic device management environment, the electronic device 100 may communicate with the access point 200 through the communication interface 160 (for example, a communication interface including a plurality of communication modules or a communication interface supporting a plurality of channel bands through one communication module). According to an embodiment of the present disclosure, the electronic device 100 may include a communication module 161 supporting a first frequency band (for example, a Wi-Fi communication module Wi-Fi 1 managed based on the first frequency band) and a communication module 162 supporting a second frequency band (for example, a Wi-Fi communication module Wi-Fi 2 managed based on the second frequency band). The electronic device 100 may adaptively establish the first communication channel based on the communication module 161 or the second communication channel based on the communication module 162 in correspondence to that the electronic device 100 is disposed within each frequency band specific communication available range of the access point 200.

The network 106 may include telecommunications network, for example, at least one of Internet, telephone network, and mobile communication network. The network 106 may support a communication channel establishment relating to communication service management of the electronic device 100. The electronic device 100 may establish a voice call channel or a video call channel with the external electronic device 102 through the network 106. According to an embodiment of the present disclosure, the network 106 may support a communication service of the electronic device 100 establishing a communication channel with the access point 200 as being connected to the access point 200.

The external electronic device 102 may be the same or different type of the electronic device 100. The external electronic device 102 may transmit a call (for example, a voice call or a video call) connection request message to the electronic device 100 via the network 106 or may establish a communication channel to request message transmission. According to various embodiments of the present disclosure, the external electronic device 102 may communicate with the electronic device 100 through the network 106 and the access point 200. According to various embodiments of the present disclosure, the external electronic device 102 may enter a communication available area where at least one access point 200 is disposed and provides. In this case, the external electronic device 102 may communicate with the electronic device 100 through an access point, the network 106, and the access point 200 accessing the electronic device 100. An access point relating to the external electronic device 102 also may include a plurality of hardware interfaces supporting a plurality of frequency bands. The external electronic device 102 may communicate with the electronic device 100 based on a communication channel of a relatively high communication quality among a plurality of hardware interfaces.

The server 104 may include a group of one or more servers. According to various embodiments of the present disclosure, all or part of operations executed on the electronic device 100 may be executed on another one or more electronic devices (for example, the external electronic device 102 or the server 104). The server 104 may establish a communication channel with the electronic device 100 or the external electronic device 102 in relation to communication service support. According to various embodiments of the present disclosure, the server 104 may communicate with the electronic device 100 or the external electronic device 102 through the network 106 and the access point 200. During this operation, the server 104 may transmit/receive data through a specific communication channel (for example, a communication channel of a relatively high quality) that the electronic device 100 or the external electronic device 102 establishes with the access point 200.

According to an embodiment of the present disclosure, when the electronic device 100 performs a certain function or service automatically or by a request, the electronic device 100 may request at least part of a function relating thereto from another device (for example, the external electronic device 102 or the server 104) instead of or in addition to executing the function or service by itself. The other electronic devices (for example, the external electronic device 102 or the server 104) may execute the requested function or an additional function and may deliver an execution result to the electronic device 100. The electronic device 100 may provide the requested function or service by processing the received result as it is or additionally. For this, for example, cloud computing, distributed computing, or client-server computing technology, may be used.

The electronic device 100 may include an interface 110, a processor 120, a memory 130, an input/output interface 170, a display 150, and a communication interface 160. Additionally or alternatively, the electronic device 100 may include a sensor hub 180. According to an embodiment of the present disclosure, the electronic device 100 may omit at least one of the components or may additionally include a different component.

The interface 110, for example, may include a circuit for connecting the components 120 to 170 to each other and delivering a communication (for example, control message and/or data) between the components 120 to 170. For example, the interface 110 may receive an input signal corresponding to the activation of the communication interface 160 from the input/output interface 170 and may deliver the input signal to the processor 120. The interface 110 may deliver a control signal of the processor 120 relating to the activation of the communication interface 160 to the communication interface 160. According to various embodiments of the present disclosure, the interface 110 may deliver a control signal relating to the activation of the communication module 161 or a control signal relating to the activation of the communication module 162 to the communication interface 160.

The processor 120 may include at least one of an AP 30, a communication processor (CP) 20, and a CPU. The processor 120, for example, may execute calculation or data processing for control and/or communication of at least one another component of the electronic device 100. According to various embodiments of the present disclosure, the processor 120 may perform data processing or control signal processing relating to at least one application execution.

According to an embodiment of the present disclosure, the AP 30 may support the activation of at least one of the communication modules 161 and 162 of the communication interface 160 in correspondence to an input signal occurrence or in correspondence to the scheduling of a job (for example, a task, a processor, and so on) set to be executed on the electronic device 100. The AP 30 may determine a hardware interface of at least one access point 200 in correspondence to a search operation of the communication module 161 or 162 and may support establishing a communication channel with a specific hardware interface according to a setting. For example, when a hardware interface supporting a communication channel of a relatively high quality is found, the AP 30 may control a communication channel establishment based on a communication module (for example, the communication module 162) to which a corresponding hardware interface is connectible.

According to various embodiments of the present disclosure, when a first hardware interface of the access point 200 is found through a search operation, the AP 30 may establish a first communication channel (for example, a communication channel connected to the access point 200 based on the first frequency band) based on the communication module 161. The AP 30 may perform a search in a certain period or in real time when establishing the first communication channel. When a second hardware interface (or another second communication channel based on the same first hardware interface) of the access point 200 is found, the AP 30 may establish a second communication channel (for example, a communication channel connected to the access point 200 based on the second frequency band) based on the communication module 162. The AP 30 may notify an electronic device establishing the first communication channel to the same access point 200 by providing identification information during an operation of forming the second communication channel. Correspondingly, the AP 30 may seamlessly transmit/receive data, which is transmitted/received through the first communication channel, through the second communication channel.

According to various embodiments of the present disclosure, when the second hardware interface is found (or the same second communication channel of the first hardware interface is found), the AP 30 may examine a reception intensity with the access point 200 based on the second hardware interface. When a reception intensity does not satisfy a specified condition, for example, a reception intensity is less than a specified reception intensity (for example, less than 60 dB or 70 dB), the AP 30 may maintain a communication channel establishment based on the communication module 161. The AP 30 may use data transmission speed and noise level in addition to reception intensity as a reference for maintaining a communication channel establishment.

According to various embodiments of the present disclosure, the AP 30 may perform a reception intensity test in a certain period or in real time while maintaining the second communication channel based on the communication module 162. The AP 30 may perform a surrounding search when the reception intensity of the second communication channel does not satisfy a specified condition. When the first hardware interface of the access point 200 is found, the AP 30 may test a reception intensity with the access point 200 based on the first hardware interface. When a reception intensity with the access point 200 based on the first hardware interface satisfies a specified condition, for example, the reception intensity is greater than a specified reception intensity (for example, more than 70 dB), the AP 30, for example, may perform first communication channel switching.

The AP 30 may determine whether the first hardware interface is the same access point 200 establishing a second communication channel during a first communication switching operation. In the case of the first hardware interface of the same access point 200, the AP 30 may perform communication channel switching. During communication channel switching of the same access point 200, the AP 30 may transmit/receive data following data transmitted/received through the second communication channel, through the first communication channel, by providing identification information of the electronic device 100.

In the case of not the same access point 200, the AP 30 may not perform channel switching. During this operation, the AP 30 may output a message (for example, a pop-up message) corresponding to as the first hardware interface of another access point is found. When a communication channel establishment with another access point is requested, the AP 30 may process access point switching.

According to various embodiments of the present disclosure, the AP 30 may determine whether to access a specified access point network (for example, an enterprise wireless LAN (WLAN) network including an access point controller (APC)) during a search operation using the communication interface 160. In the case of entering a specified access point network, the AP 30 may stop hardware interface specific communication channel switch processing of the access point 200. In the case of entering a specified access point network, the AP 30 may perform a control to establish a communication channel with an access point in correspondence to a control of the APC. In the case of being out of a specified access point network, the AP 30 may perform a control to establish a communication channel based on a communication environment of a relatively high quality.

According to various embodiments of the present disclosure, the AP 30 may search for a hardware interface of the access point 200 registered in a stored and managed communication history during an operation for performing a search operation. Once a registered access point is found, the AP 30 may perform a control to be connected to the hardware interface of the corresponding access point 200. The AP 30 may perform a search operation after the connection of the access point 200. If there is a hardware interface of a relatively high quality, the AP 30 may establish a communication channel based on a corresponding hardware interface. According to an embodiment of the present disclosure, when the access point 200 having a history of establishing a Wi-Fi communication channel of a 2.4 GHz band and a 5 GHz band is found, the AP 30 may establish a Wi-Fi communication channel of a 5 GHz band with the corresponding access point 200. The application processor 30 may perform a search operation while a Wi-Fi communication channel of a 5 GHz band is established. When the same access point 200 manages a hardware interface of a 60 GHz band, the AP 30 may establish a communication channel of a 60 GHz band with the same access point 200.

According to various embodiments of the present disclosure, the AP 30 may search for a plurality of hardware interfaces during a search operation, for example, a hardware interface of the access point 200 relating to 2.4GHz, 5GHz, and 60GHz bands. Once a plurality of hardware interfaces are found, the AP 30 may establish a communication channel with the access point 200 based on a 60 GHz band corresponding to a communication environment of a relatively high quality. For example, when a hardware interface of the access point 200 relating to 2.4GHz and 5GHz bands is found during a search operation, the AP 30 may establish a communication channel with the access point 200 based on a 5 GHz band corresponding to a communication environment of a relatively high quality.

During the above operation, the AP 30 may test a reception intensity on a connected communication channel of a high quality. Once a reception intensity of a high quality communication channel does not satisfy a specified condition, the AP 30 may establish a communication channel based on a hardware interface of the access point 200 of a relatively low quality.

The communication channel management operation of the application processor 30 may be performed by the communication processor 20. For example, when the application processor 30 enters a sleep state, the communication processor 20 may receive a transferred control for the communication interface 160. Based on the transferred control, the communication processor 20 may control a communication channel establishment based on the communication module 161 or the communication module 162 included in the communication interface 160.

The sensor hub 180 may be a processor designed to allow relatively low power driving in comparison to the processor 120. The sensor hub 180, for example, may be connected to at least one sensor. The sensor hub 180 activates necessary sensors according to a management of the electronic device 100 and collects sensor information to be provided to the processor 120. According to various embodiments of the present disclosure, the sensor hub 180 may be prepared in a form of being included in the processor 120. When the application processor 30 is in a sleep state, the sensor hub 180 may receive a control for the communication interface 160 and support the high quality communication channel establishment.

The memory 130 may include volatile and/or nonvolatile memory. The memory 130, for example, may store instructions or data relating to at least one another component of the electronic device 100. The memory 130 may store software and/or programs. The programs may include a kernel 141, a middleware 143, an application programming interface (API) 145, and/or an application program (or an application) 147. At least part of the kernel 141, the middleware 143, or the API 145 may be called an operating system (OS). The memory 130 may store a result obtained by performing a communication channel establishment with the access point 200. For example, the memory 130 may store a communication history with the access point 200. The stored communication history may be referenced by the AP 30 during a search operation of the access point 200.

The kernel 141, for example, may control or manage system resources (for example, the interface 110, the processor 120, the memory 130, and so on) used for performing operations or functions implemented in other programs (for example, the middleware 143, the API 145, or the application program 147). Additionally, the kernel 141 may provide an interface for controlling or managing system resources by accessing an individual component of the electronic device 100 from the middleware 143, the API 145, or the application program 147. According to an embodiment of the present disclosure, the kernel 141 may provide an interface for controlling and managing system resources relating to a communication channel establishment based on the communication module 161 and an interface for controlling and managing system resources relating to a communication channel establishment based on the communication module 162. Additionally, the kernel 141 may provide an interface for controlling and managing system resources relating to second communication channel switching from the first communication channel and an interface for controlling and managing system resources relating to first communication channel switching from the second communication channel.

The middleware 143, for example, may serve as an intermediary role for exchanging data as the API 145 or the application program 147 communicates with the kernel 141. Additionally, in relation to job requests received from the application program 147, the middleware 143, for example, may perform a control (for example, scheduling or load balancing) for the job requests by using a method of assigning a priority for using a system resource (for example, the interface 110, the processor 120, the memory 130, and so on) of the electronic device 100 to at least one application program among the application programs 147. For example, the middleware 143 may perform communication channel establishment request processing with the access point 20 found according to search operation request processing and a search operation. The middleware 143 may perform communication channel switching request processing in correspondence to search information.

The API 145, as an interface for allowing the application 147 to control a function provided from the kernel 131 or the middleware 132, may include at least one interface or function (for example, an instruction) for file control, window control, image processing, character control, and the like. According to an embodiment of the present disclosure, the API 145 may include a search operation control API based on at least one of the communication modules 161 and 162 included in the communication interface 160 and an API relating to a communication channel establishment according to a search result. Additionally, the API 145 may include an API relating to switching from the first communication channel into the second communication channel and an API relating to switching from the second communication channel into the first communication channel.

The application 147 may include various applications supported by the electronic device 100. For example, the application 147 may include a data communication related web surfing function application, a call function application, a content streaming application, and a voice search function application. According to the execution of the application 147, the electronic device 100 may support a user function. Accordingly, at least one function provided by the application 147 may be limited in correspondence to a control of the AP 30 or the communication processor 20 or the sensor hub 180.

According to various embodiments of the present disclosure, the application 147 may include at least one communication based application managed based on the communication module 161 or the communication module 162. The application 147 may perform data transmission/reception through the communication module 161. The application 147 may perform data transmission/reception based on the communication module 162 in correspondence to a control of the AP 30. During this operation, the application 147 may receive data following data, which is transmitted/received through the communication module 161, based on the communication module 162. Alternatively, the application 147 may receive data following data, which is transmitted/received through the communication module 162, based on the communication module 161.

The input/output interface 170, for example, may serve as an interface for delivering instructions or data inputted from a user or another external device to another component(s) of the electronic device 100. Additionally, the input/output interface 170 may output instructions or data received from another component(s) of the electronic device 100 to a user or another external device.

According to an embodiment of the present disclosure, the input/output interface 170 may include an audio module for outputting audio data among data received through the communication module 161 or the communication module 162. According to various embodiments of the present disclosure, an audio module included in the input/output interface 170 may output audio data for guiding a first communication channel establishment and audio data for guiding a second communication channel establishment. The audio module may output audio data for guiding switching from the first communication channel to the second communication channel and audio data for guiding switching from the second communication channel to the first communication channel. The audio module may output the audio data through a speaker, an earphone connected through an earphone jack, and a wirelessly connected headset.

The display 150, for example, may include a liquid crystal display (LCD), a light emitting diode (LED) display, an organic LED (OLED) display, a microelectromechanical systems (MEMS) display, an electronic paper display, and the like. The display 150 may display various content (for example, text, image, video, icon, symbol, and so on) to a user. The display 150 may include a touch screen, and for example, may receive a touch, gesture, proximity, or hovering input by using an electronic pen or a user's body part.

According to various embodiments of the present disclosure, the display 150 may output at least one screen (for example, a search operation screen, a search result screen, and a screen of communication channel establishment with the access point 200) corresponding to a first communication channel establishment operation based on the communication module 161. Additionally, the display 150 may output at least one screen corresponding to a second communication channel establishment operation based on the communication module 162. According to various embodiments of the present disclosure, the display 150 may output at least one of text and image indicating switching from the first communication channel to the second communication channel and at least one of text and image indicating switching from the second communication channel to the first communication channel. Additionally or alternatively, according to various embodiments of the present disclosure, the display 150 may output an indicator corresponding to a first communication channel establishment, an indicator corresponding to a second communication channel establishment, and an indicator meaning channel switching.

The communication interface 160, for example, may set communication between the electronic device 100 and an external device (for example, the external electronic device 102 or the server 104). The communication interface 160 may include a communication module 161, a communication module 162, and another communication module 163.

For example, the other communication module 163 may communicate with an external device (for example, the external electronic device 102 or the server 104) in connection to the network 106 through wireless communication or wired communication. The wireless communication may use long term evolution (LTE), LTE-advanced (LTE-A), code division multiple access (CDMA), wireless CDMA (WCDMA), universal mobile telecommunications system (UMTS), wireless broadband (WiBro), or global system for mobile communications (GSM) as a cellular communication protocol, for example. Additionally, the wireless communication may include a communication method based on a Bluetooth (BT) communication module, a Wi-Fi direct communication module, and the like. The wired communication, for example, may include at least one of universal serial bus (USB), high definition multimedia interface (HDMI), recommended standard 232 (RS-232), and plain old telephone service (POTS).

The communication module 161 or the communication module 161, for example, may be a Wi-Fi communication module. According to an embodiment of the present disclosure, the communication module 161 may be a Wi-Fi communication module for establishing a communication channel with the access point 200 based on a 2.4 GHz frequency band. The communication module 162 may be a Wi-Fi communication module for establishing a communication channel with the access point 200 based on a 5GHz frequency band. According to various embodiments of the present disclosure, the communication interface 160 may further include a Wi-Fi communication module for supporting at least one another frequency band, for example, a 60 Hz frequency band. The communication module 161 or the communication module 162 may perform communication channel establishment or communication channel switching in correspondence to a control of the processor 120. The communication module 161 or the communication module 162 may operate as one communication module. Through one communication module, a communication channel based on different frequency bands may be established.

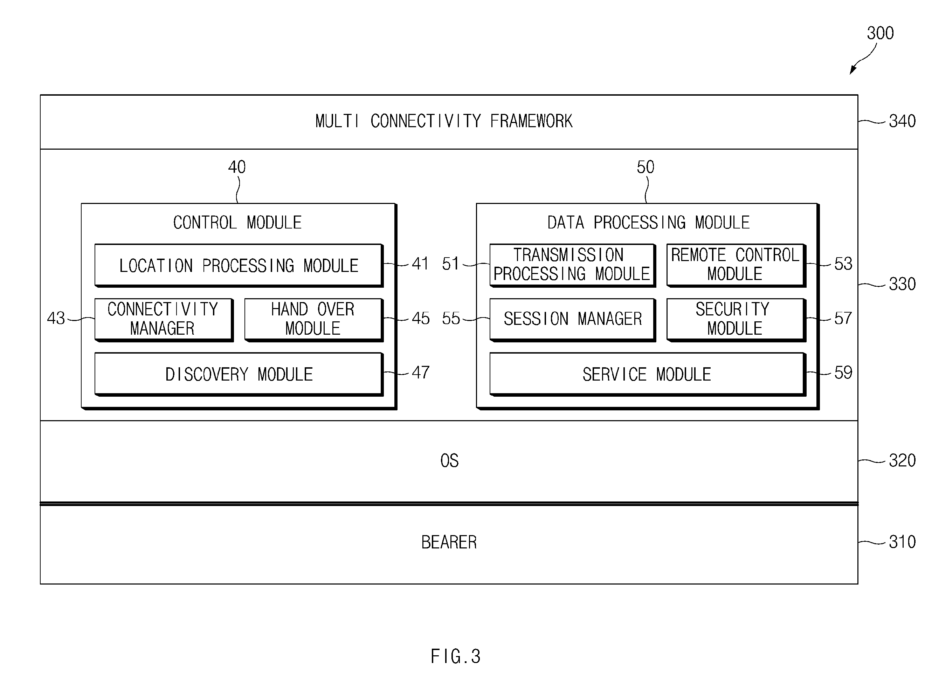

FIG. 3 is a view illustrating a program module according to various embodiments of the present disclosure.

Referring to FIG. 3, a program module 300 may include a bearer area 310, an OS area 320, a module area 330, and a multi connectivity framework area 340.

The bearer area 310 (for example, a connectivity bearer layer) may include an area of the communication interface 160. For example, the bearer area 310 may be an area corresponding to hardware, such as the communication module 161, the communication module 162, and the other communication module 163. At least one communication module disposed in the bearer area 310 may perform data transmission/reception in correspondence to a control of the OS area 320. According to an embodiment of the present disclosure, the bearer area 310 may search for the access point 200 in correspondence to a control of the OS area 320. The bearer are 310 may establish a communication channel based on a frequency band connectible with the found access point 200.

The OS area 320 may control the management of at least one communication module included in the bearer area 310 in correspondence to a request delivered from the module area 330. For example, the OS area 320 may support interfacing between at least one module of the module area 330 and a communication module of the bearer area 310.

The module area 330 may include a control module 40 and a data processing module 50. The control module 40 (for example, a control plane) may include a location processing module 41 (for example, a proximity and presence module), a connection manager 43, a handover module 45 (for example, a seamless handover module), and a display module 47 (for example, a device/service discovery module).

The location processing module 41 may mange that there is another electronic device to be connected around and measure a target electronic device specific distance and angle. For example, the location processing module 41 may collect signals by controlling at least one communication module or microphone included in the bearer area 310. The location processing module 41 may calculate the location, distance to itself, or an angle of a target electronic device based on the collected signals.

Once a device is found, the connection manager 43 manages connection procedure content necessary for performing a procedure for connecting to a corresponding device according to service or a user's intention. For example, when two devices to be connected support various connection bearers (for example, communication modules), the connection manager 43 may select an optical bearer. Alternatively, the connection manager 43 may optimize (for example, adjust a data transmission speed according to wireless environment) a connection method in the same bearer.

According to various embodiments of the present disclosure, the connection manager 43 may control the search of the connectible access point 200 and may perform a control to establish a communication channel of a relatively high quality in the found access point 200. For example, the connection manager 43 may determine whether there is a connectible access point 200 by using the communication module 161. If there is an available access point, the connection manager 43 may control a first communication channel establishment based on the corresponding access point 200 and the communication module 161. The connection manager 43 may determine whether the same access point 200 supports a frequency band relating to the communication module 162 by performing a search using the communication module 162 while maintaining a first communication channel. When the same access point 200 supports a frequency band relating to the communication module 162, the connection manager 43 may control a second communication channel establishment based on the communication module 162.

When a service provided according to the characteristics of the bearer area 310 or the current connectivity is required to be transferred to another bearer (for example, another communication module) or another device, the handover module 45 may detect this automatically and switch the connectivity. For example, when the access point 200 is required to be changed in correspondence to a movement of the electronic device 100, the handover module 45 may process changing of the access point 200.

According to various embodiments of the present disclosure, the handover module 45 may determine the received signal intensity of the currently connected communication channel. When the received signal intensity does not satisfy a specified condition, the handover module 45 may process another communication channel switching. According to an embodiment of the present disclosure, the handover module 45 may determine whether the received signal intensity of a communication channel in the relatively high frequency band (for example, a 5 GHz band) of the same access point 200 satisfies the specified condition. When the received signal intensity does not satisfy the specified condition, the handover module 45 may switch into a communication channel of a relatively low frequency band (for example, a 2.4 GHz band) of the same access point 200.

The display module 47 (for example, a device/service discovery module) may process a search procedure for determining whether there is a device around. The discovery module 47 may search for a device supporting service before connection among found devices. The search procedure may include a synchronous method of determining whether there is a device as all electronic devices notify their presences periodically and an asynchronous method in which an electronic device transmits a search request message at a specific timing and performs searching.

The data processing module 50 may include a transmission processing module 51 (for example, a messaging/data transfer module), a remote control module 53, a session manager 55, a security module 57, and a service module 59 (for example, a service discovery module).

The transmission processing module 51 may provide quality of service (QoS) according to data or media delivered to a module responsible for a data transmission method after a session is set. The transmission processing module 51 may perform a method, for example, transmitting data once to several electronic devices or transmitting one data to allow several electronic devices to receive the transmitted data simultaneously. The method, for example, may be selected according to a setting or an event. Additionally, the transmission processing module 51 may manage an additional technique (for example, forward error correction (FEC), automatic repeat request (ARQ), and so on) for securing the reliability with respect to the transmission.

The remote control module 53 may serves as a role for controlling a device after the device is connected. For example, the remote control module 53 may define a protocol for exchanging a control command, such as driving a washing machine or playing media, and may control operations of a device based on the defined protocol.

After a device is connected, the session manager 55 may open or close a dialog or a session for data exchange between two devices. The session manager 55 may dynamically participate in a dialog.

The security module 57 may manage functions relating to security, such as encryption of data to be transmitted and authentication between connected devices. The service module 59 may search for a device supporting specified service among connected devices. The service may include notification for delivering data that a sensor detects periodically or in correspondence to an event occurrence under a print, file sharing, media streaming, IoT environment, and the like.

The multi connectivity framework 340 includes a service level association and processes service connection with a device. For example, a procedure for search for a device may include device discovery and service discovery. The multi connectivity framework 340 may associate discoveries to be performed once by associating a device discovery result and a service discovery result to combine two discovery procedures.

The multi connectivity framework 340 may interoperate with the sensor hub 180. Some functions performed by the multi connectivity framework 340 may be driven in the sensor hub 180. In a structure without the sensor hub 180, the multi connectivity framework 340 may be driven by a host processor, such as the AP 30. When a multi core processor configured with several processors is driven as a host processor, a multi core AP may include a high speed core or a low power driven core. In this case, according to a multi connectivity framework driven state, among several cores of an AP, a high speed core may be responsible for a multi framework connectivity framework or a core designed with low power consumption may be responsible for a multi connectivity framework. According to various embodiments of the present disclosure, multi connectivity framework driving may interoperate with a plurality of cores (for example, APs). Additionally, the electronic device 100 including a multi core AP may change the operating position of a multi connectivity framework in correspondence to a turn-on state or a turn-off state of an AP chip.

As mentioned above, according to various embodiments of the present disclosure, an electronic device may include a communication interface including a plurality of communication modules or a communication interface supporting a plurality of channel bands in one communication module and a processor configured to establish, when establishing a first communication channel with a access point based on a specified frequency band, a second communication channel based on another frequency band that the access point supports according to a specified condition.

As mentioned above, according to various embodiments of the present disclosure, an electronic device may include a communication interface including a plurality of communication modules or a communication interface supporting a plurality of channel bands in one communication module, and a processor set to perform search and connection according to a specified period or event for connection in another frequency band of the same access point while a first communication channel is established with an access point based on a specified frequency band and establish a second communication channel based on another frequency band that the access point supports.

According to various embodiments of the present disclosure, an electronic device may include a communication interface including a plurality of communication modules or a communication interface supporting a plurality of channel bands in one communication module, and a processor for establishing a second communication channel based on another frequency band that an access point supports according to a specified condition if another frequency band connection of the same access point is available when establishing a first communication channel with the access point based on a specified frequency band.

According to various embodiments of the present disclosure, an electronic device may include a memory for storing a program relating to a plurality of communication module managements or a program for managing a plurality of channel bands in one communication module, and a processor connected to the memory. The processor may establish a second communication channel based on another frequency band that an access point supports according to a specified condition if another frequency band connection of the same access point is available when establishing a first communication channel with the access point based on a specified frequency band.

According to various embodiments of the present disclosure, while data is transmitted based on the first communication channel, the processor may be set to establish the second communication channel after the data transmission is completed.

According to various embodiments of the present disclosure, when a first communication channel of a relatively low frequency band is established, the processor may establish a second communication channel of a relatively high frequency band based on the search or even when the second communication channel of the relatively high frequency band is connected first, if a performance of the second communication channel does not satisfy a specified condition, the processor may search for the first communication channel and if the specified condition is satisfied, connect to the first communication channel.

According to various embodiments of the present disclosure, the processor may be set to establish a 5 GHz or 60 GHz band based second communication channel when establishing a 2.4 GHz band based first communication channel or may be set to establish a 2.4 GHz band based first communication channel in correspondence to whether a specified condition is satisfied when establishing a 5 GHz or 60GHz band based second communication channel.

According to various embodiments of the present disclosure, the processor may be set to output at least one of notification information corresponding to the first communication channel establishment, notification information corresponding to the second communication channel establishment, and notification information corresponding to switching from the first communication channel to the second communication channel.

According to various embodiments of the present disclosure, the processor may be set to output at least one of an indicator corresponding to the first communication channel establishment, an indicator corresponding to the second communication channel establishment, and an indicator corresponding to switching from the first communication channel to the second communication channel.

According to various embodiments of the present disclosure, the processor may be set to determine whether a wireless signal reception intensity of the other frequency band satisfies a specified condition, when the specified condition is satisfied, establish the second communication channel, when the specified condition is not satisfied, maintain the first communication channel, while the second communication channel is established, if the second communication channel does not satisfy the specified condition and the first communication channel satisfies the specified condition, establish or maintain the first communication channel, and when the first communication channel does not satisfy the specified condition, maintain the second communication channel.

According to various embodiments of the present disclosure, by comparing identification information of an access point establishing the first communication channel and identification information of a found access point of another frequency band, the processor may determine whether the access points are the same access point.

According to various embodiments of the present disclosure, when the MAC address or SSID value of the access point and the MAC address or SSID value of the access point of another frequency band have a similarity ratio of a certain value, the processor may determine the access points as the same access point, or may determine the access points as the same access point by comparing the device identifiers (IDs) of the access points, or may determine the access points as the same access point by comparing the vendor specific fields in the probe responses of the access points.

According to various embodiments of the present disclosure, the processor may be set to maintain the first communication channel when another frequency band of an access point is found.

According to various embodiments of the present disclosure, while data is transmitted/received using the first communication channel, the processor may be set to maintain the first communication channel until the current data transmission/reception is completed.

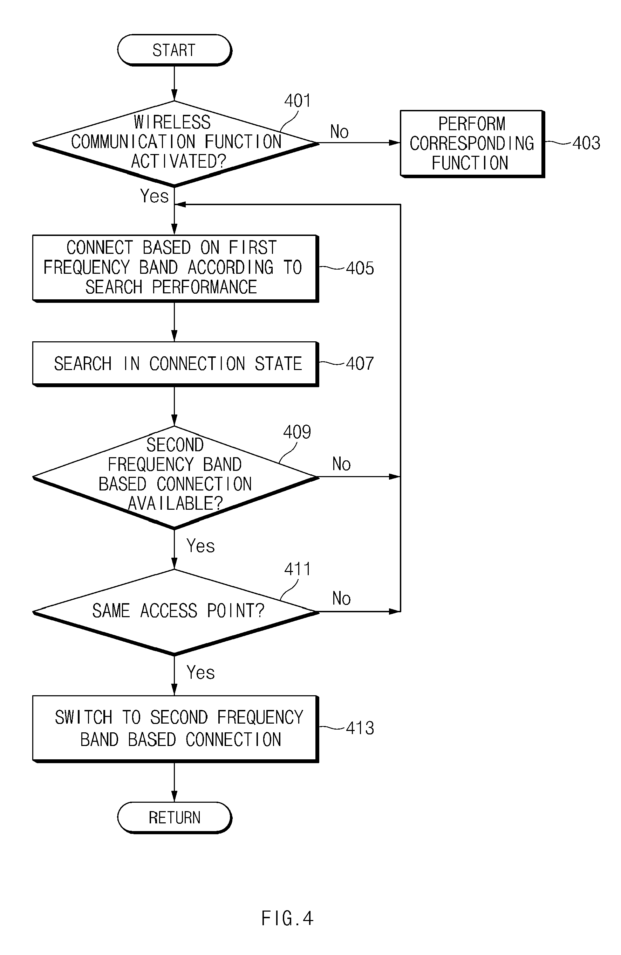

FIG. 4 is a flowchart illustrating a communication channel management method according to various embodiments of the present disclosure.

Referring to FIG. 4, in relation to the communication channel management method, when an event occurs, the AP 30 may determine whether the event relates to a wireless communication function activation in operation 401. If the event does not relate to a wireless communication function activation, the AP 30 may support function performance according to an event type in operation 403. For example, the AP 30 may support a content playback function, a gallery function, and a voice search function according to the event type.

If the event relating to a wireless communication function activation occurs, the AP 30 may perform a first frequency band based connection according to a search performance in operation 405. In relation to this, the AP 30 may activate the communication module 161 in correspondence to a specified setting and may perform a first communication based first frequency band search. According to various embodiments of the present disclosure, the AP 30 may perform a second frequency band based connection based on the communication module 162 according to a setting. For example, when a hardware interface relating to the second frequency band of the access point 200 is found according to a search operation, the AP 30 may process a second frequency band based communication channel establishment with the access point 200.

In operation 407, the AP 30 may perform a search while a first frequency band based first communication channel is connected. For example, the AP 30 may perform a surrounding search in a specified certain period or in real time. During this operation, the AP 30 may perform a surrounding search by using the communication module 162. According to various embodiments of the present disclosure, the AP 30 may determine whether an event relating to a wireless communication function termination occurs while managing a first frequency band based first communication channel. When the event relating to a wireless communication function termination occurs, the AP 30 may stop the search operation and may release the first communication channel (for example, a communication function termination). The AP 30 may perform a control to return to a specified function (for example, a home screen or a function performed right before wireless communication function activation) according to the communication function termination.

Based on a search result, the AP 30 may determine whether a second frequency band based connection is available in operation 409. If the second frequency band based connection is unavailable, the AP 30 may branch into operation 405 and re-perform subsequent operations.

If the second frequency band based connection is available, the AP 30 may determine whether there is the same access point 200 in operation 411. In relation to this, the AP 30 may determine the MAC address or SSID of an access point from the search result. For example, the AP 30 may perform an identity comparison between the MAC address or SSID of the access point 200 collected during the first communication channel establishment operation and the MAC address or SSID of the newly found access point 200. In the case of supporting different frequency bands, the access point 200 may have almost the same address value but may set and provide part of the address value differently. Correspondingly, when a similarity ratio is greater than a certain value based on a comparison result of different MAC addresses or SSIDs, the AP 30 may determine the access points as a MAC address or an SSID address relating to a hardware interface supporting different frequency bands of the same access point 200.

Alternatively, a determination is made on whether there is the same access point by comparing the optional fields (for example, tagged parameters) of a probe response or comparing vender specific content of a corresponding parameter.

If there is no same access point 200, the AP 30 may branch into operation 405 and perform subsequent operations. If there is the same access point 200, the AP 30 may process second frequency band based connection switching in operation 413. The AP 30 may support a wireless communication function based on a second communication channel that is established based on the second frequency band.

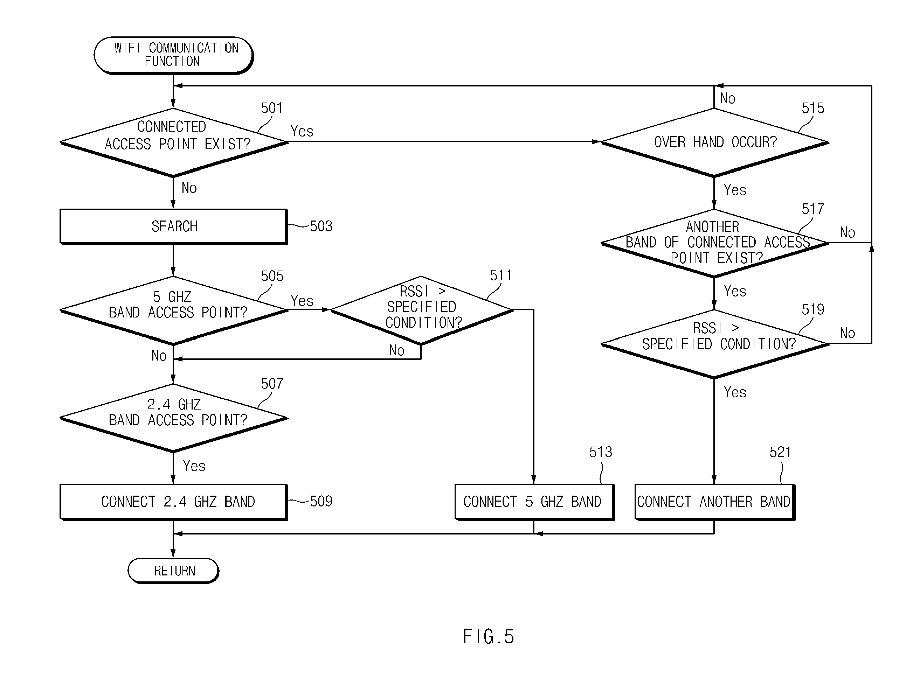

FIG. 5 is a flowchart illustrating a communication channel switching method according to various embodiments of the present disclosure.

Referring to FIG. 5, the electronic device 100 may be in a state of receiving a Wi-Fi function activation request. In operation 501, the AP 30 may determine whether there is a connected access point 200. If there is no connected access point 200, the AP 30 may perform a search operation in operation 503. For example, the AP 30 may perform a surrounding search operation based on a communication module (for example, the communication module 162) supporting a communication channel of a relatively high quality. Alternatively, the AP 30 may perform a surrounding search by simultaneously or alternately activating the communication module 161 and the communication module 162 included in the communication interface 160.

When a surrounding search result is collected, the AP 30 may determine whether there is a 5 GHz band access point in operation 505. In relation to this, the AP 30 may determine whether there is a connectible access point supporting a 5 GHz band based on information provided from access points.

If there is no connectible access point of a 5 GHz band, the AP 30 may determine whether there is a 2.4 GHz band access point in operation 507. In relation to this, the AP 30 may perform a surrounding search based on the communication module 161. Based on a surrounding search result, the AP 30 may determine whether there is a connectible access point of a 2.4GHz band from the information provided from the access points.

If there is a connectible access point of a 2.4 GHz band, the AP 30 may process a 2.4 GHz band connection in operation 509. For example, the AP 30 may establish a first communication channel with an access point supporting the 2.4 GHz band by using the communication module 161.

When there is a 5 GHz band access point in operation 505, the AP 30 may determine whether a wireless signal reception intensity (for example, received signal strength indicator (RSSI)) received through the 5 GHz band is greater than a specified condition in operation 511. For example, the AP 30 may determine whether the received wireless signal reception intensity is 60 dB or 70 dB in relation to the 5 GHz band. If the received wireless signal reception intensity does not satisfy the specified condition, the AP 30 may branch into operation 507 and re-perform subsequent operations.

If the received wireless signal reception intensity satisfies the specified condition (for example, the received wireless signal reception intensity in relation to the 5 GHz band is greater than a specified intensity), the AP 30 may process a 5 GHz band connection in operation 513. For example, the AP 30 may establish a second communication channel with an access point supporting the 5GHz band by using the communication module 162.

If there is a connected access point 200 in operation 501, the AP 30 may support a wireless communication function based on the connected access point 200. The AP 30 may determine whether a handover occurs in operation 515 while supporting a wireless communication function. If no handover occurs, the AP 30 may branch into operation 501 and re-perform subsequent operations.

When the handover occurs, the AP 30 may determine whether there is another band of a connected access point in operation 517. For example, the AP 30 may receive information on whether to support another band from the connected access point. Alternatively, the AP 30 may determine whether to support another frequency band of a connected access point by using a communication module supporting another frequency band. During this operation the AP 30 may compare the MAC addresses or SSID values of a connected access point based on information collected through surrounding search. When a comparison result has a similarity ratio of more than a specified size, the AP 30 may determine whether there is another frequency band of a connected access point. If there is no another band of a connected access point, the AP 30 may branch into operation 501 and re-perform subsequent operations. During this operation, the AP 30 may maintain the currently connected communication channel until a function termination event occurs.

When there is another band of a connected access point, the AP 30 may determine whether a wireless signal reception intensity (for example, RSSI) of another band is greater than a specified condition in operation 519. When the wireless signal reception intensity is less than the specified condition, the AP 30 may maintain the currently connected communication channel. Additionally, the AP 30 may branch into operation 501 and re-perform subsequent operations. When the received signal intensity is greater than the specified condition, the AP 30 may process another band connection in operation 521. During this operation, the AP 30 may process another band connection of a connected access point by using a communication module supporting another band. According to various embodiments of the present disclosure, in relation to a seamless service support, the AP 30 may perform processing to continuously transmit/receive data following data, which is transmitted/received through a previous communication channel, through a changed another band channel.

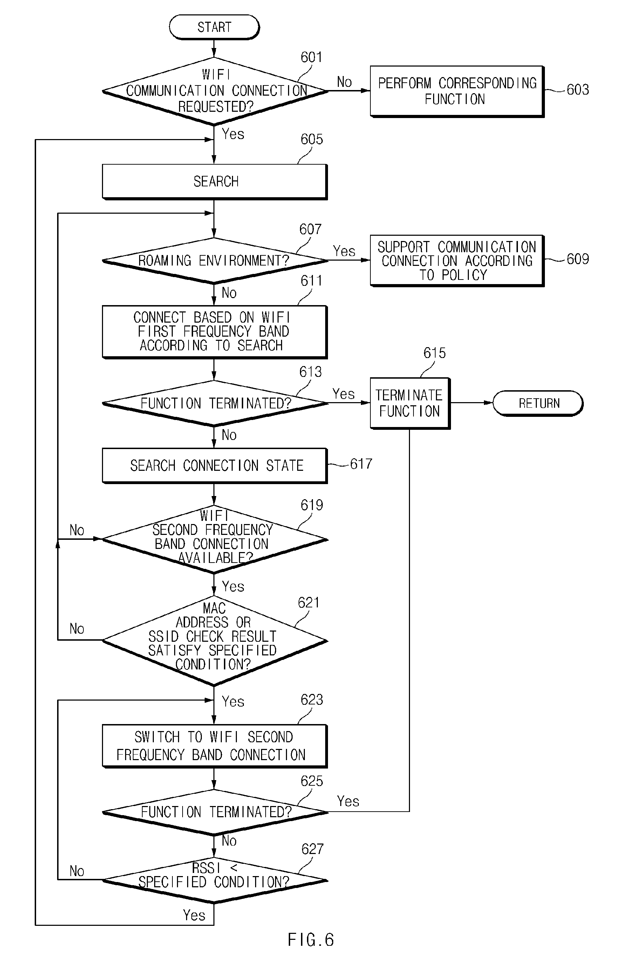

FIG. 6 is a flowchart illustrating a Wi-Fi communication management method according to various embodiments of the present disclosure.

Referring to FIG. 6, in relation to the Wi-Fi communication management method, when an event occurs, the AP 30 may determine whether the event relates to a Wi-Fi communication connection request in operation 601. If the event does not relate to the Wi-Fi communication connection request, the AP 30 may support function performance according to an event type in operation 603. For example, the AP 30 may support a broadcast reception function, a gallery function, a call function, and a web surfing function according to the event type.

If the event relating to a Wi-Fi communication connection request occurs, the AP 30 may perform a search operation in operation 605. During this operation, the AP 30 may perform a search operation based on at least one of the communication module 161 and the communication module 162. According to an embodiment of the present disclosure, the AP 30 may perform a search operation based on the communication module 161 in correspondence to a specified setting.

When a response signal is received from at least one access point 200 in correspondence to the search operation, the AP 30 may determine whether there is a roaming environment in operation 607. For example, the AP 30 may determine whether the response signal is provided from the access point 200 included in an enterprise WLAN network including an APC by determining the response signal provided from the access point 200. In relation to this, the access point 200 may provide information relating to a network that the access point 200 belongs to the electronic device 100 while providing a response signal. When a response signal corresponding to a roaming environment is received from the access point 200, the AP 30 may process communication connection support according to a policy in operation 609. For example, the AP 30 may process a communication channel establishment in correspondence to an APC control of an enterprise WLAN network.

According to various embodiments of the present disclosure, when a response signal is received from a plurality of access points 200, the AP 30 may ignore the response signal received from the access point 200 of the enterprise WLAN network or may remove the response signal from a result list. Alternatively, the AP 30 may first access the access point 200 of the enterprise WLAN network according to a specified wireless connection policy and may process a communication channel establishment in correspondence to an APC control.

If there is no roaming environment, the AP 30 may perform a Wi-Fi first frequency band based connection (for example, a first communication channel establishment) according to the search in operation 611. For example, the AP 30 may manage the communication module 161 to perform a surrounding search according to a specified setting and accordingly, may perform a Wi-Fi first frequency band based connection with the found access point 200. The AP 30 may support a wireless communication function based on the connected first communication channel.

In operation 613, the application processor 30 may determine whether an event relating to a function termination occurs. When the function termination related event occurs, the AP 30 may terminate a wireless communication function in operation 615. The AP 30 may switch into a specified function (for example, a home screen or a function performed right before the wireless communication function termination) according to the wireless communication function termination.

When the function termination related event does not occur, the AP 30 may perform a connection state search in operation 617. For example, the AP 30 may perform a surrounding search according to a specified certain period while managing a first communication channel. According to an embodiment of the present disclosure, the AP 30 may perform a surrounding search based on the communication module 162.

Based on a search result, the AP 30 may determine whether a Wi-Fi second frequency band connection is available in operation 619. If the Wi-Fi second frequency band connection is unavailable, the application processor 30 may branch into operation 607 and re-perform subsequent operations. Alternatively, the AP 30 may branch into operation 611 and re-perform subsequent operations while supporting the first communication channel management.

If the Wi-Fi second frequency band connection is available, the AP 30 may determine at least one of MAC address and SSID and may determine whether a determination result satisfies a specified condition in operation 621. If the determination result does not satisfy the specified condition, the application processor 30 may branch into operation 607 or 611 and re-perform subsequent operations.

If the determination result satisfies the specified condition, the AP 30 may switch the Wi-Fi second frequency band connection in operation 623. For example, the application processor 30 may establish a second communication channel based on the communication module 162 and may release the first communication channel based on the communication module 161. During this operation, the AP 30 may receive the following data that is obtained through the second communication channel by providing information on the last data received through the first communication channel to the access point 200. Additionally, the AP 30 may transmit data following the last data, which is transmitted through the first communication channel, to the access point 200 through the second communication channel.

In operation 625, the AP 30 may determine whether an event relating to a function termination occurs. When the function termination related event occurs, the AP 30 may process a wireless communication function termination in operation 615. For example, the application processor 30 may release the second communication channel.

When the function termination related event does not occur, the AP 30 may perform a wireless signal reception intensity test (for example, RSSI test) of the second communication channel. For example, the AP 30 may determine whether the received signal intensity is less than a specified condition (for example, less than 60 dB or 70 dB) in operation 627. If the wireless signal reception intensity is greater than a specified condition, the AP 30 may branch into operation 623 and re-perform subsequent operations.

If the wireless signal reception intensity is less than a specified condition, the AP 30 may branch into operation 605 and perform subsequent operations. For example, the AP 30 may perform a surrounding search by activating the communication module 161. When a first frequency band related access point 200 is found, the AP 30 may perform communication channel switching. During this operation, the AP 30 may determine whether the first frequency band related access point 200 is identical to the access point (i.e. is the same access point) establishing the second communication channel. In the case of the same access point, the AP 30 may perform channel switching. In the case of not the same access point, the AP 30 may perform channel switching.

As mentioned above, according to various embodiments of the present disclosure, a communication channel management method of an electronic device may include establishing a first communication channel with an access point based on a specified frequency band and establishing, when establishing a first communication channel with the access point based on a specified frequency band, a second communication channel based on another frequency band that the access point supports according to a specified condition

As mentioned above, according to various embodiments of the present disclosure, a communication channel management method of an electronic device may include establishing a first communication channel with an access point based on a specified frequency band and establishing a second communication channel based on another frequency band that the access point supports by performing search according to a specified period or event for connection in another frequency band of the same access point while the first communication channel is established.

According to various embodiments of the present disclosure, a communication channel management method of an electronic device may include establishing a first communication channel with an access point based on a specified frequency band and establishing a second communication channel based on another frequency band that the access point supports according to a specified condition when another frequency band of the same access point is connectible while the first communication channel is established.

According to various embodiments of the present disclosure, the establishing of the second communication channel further includes, while data is transmitted based on the first communication channel, establishing the second communication channel after the data transmission is completed.

According to various embodiments of the present disclosure, the establishing of the second communication channel includes, when a first communication channel of a relatively low frequency band is established, establishing a second communication channel of a relatively high frequency band based on the search, or when a second communication channel of a relatively high frequency band is established, establishing a first communication channel of a relatively low frequency band.

According to various embodiments of the present disclosure, the establishing of the second communication channel includes establishing a 5 GHz or 60 GHz band based second communication channel when establishing the 2.4 GHz band based first communication channel or establishing a 2.4 GHz band based first communication channel when establishing a 5 GHz or 60GHz band based second communication channel.

According to various embodiments of the present disclosure, the method may further include outputting at least one of notification information corresponding to the first communication channel establishment, notification information corresponding to the second communication channel establishment, notification information corresponding to switching from the first communication channel to the second communication channel, and notification information corresponding to switching from the second communication channel to the first communication channel.

According to various embodiments of the present disclosure, the method may further include outputting at least one of an indicator corresponding to the first communication channel establishment, an indicator corresponding to the second communication channel establishment, an indicator corresponding to switching from the first communication channel to the second communication channel, and an indicator corresponding to switching from the second communication channel to the first communication channel.

According to various embodiments of the present disclosure, the establishing of the second communication channel may include, when a wireless signal reception intensity of the other frequency band satisfies a specified condition, establishing the second communication channel, when the specified condition is not satisfied, maintaining the first communication channel, while the second communication channel is established, if the second communication channel does not satisfy the specified condition and the first communication channel satisfies the specified condition, establishing or maintaining the first communication channel, and when the first communication channel does not satisfy the specified condition, maintaining the second communication channel.

According to various embodiments of the present disclosure, the method may further include, by comparing identification information of an access point establishing the first communication channel and identification information of a found access point of another frequency band, determining whether they are the same access point.

According to various embodiments of the present disclosure, the method may further include, when the MAC address or SSID value of the access point and the MAC address or SSID value of the access point of another frequency band have a similarity ratio of a specified value, determining the access points as the same access point.

According to various embodiments of the present disclosure, the method may further include maintaining the first communication channel when another frequency band of an access point is found.

As mentioned above, according to various embodiments of the present disclosure, the communication channel management method may include establishing a first communication channel with an access point based on a specified frequency band, when the MAC address or SSID value of the access point establishing the first communication channel and the MAC address or SSID value of the access point of another frequency band have a similarity ratio of a specified value, determining the access points as the same access point, and establishing a second communication channel based on another frequency band that the same access point supports.

According to various embodiments of the present disclosure, the establishing of the second communication channel may include, when a wireless signal reception intensity of the other frequency band satisfies a specified condition, establishing the second communication channel, when the specified condition is not satisfied, maintaining the first communication channel, while the second communication channel is established, if the second communication channel does not satisfy the specified condition and the first communication channel satisfies the specified condition, establishing or maintaining the first communication channel, and when the first communication channel does not satisfy the specified condition, maintaining the second communication channel.

According to various embodiments of the present disclosure, the method may further include, by comparing the devices IDs of access points, determining the access points as the same access point, and by comparing vendor specific fields in the probe responses of access points, determining the access points as the same access point.

According to various embodiments of the present disclosure, the method may further include maintaining the first communication channel when another frequency band of an access point is found.

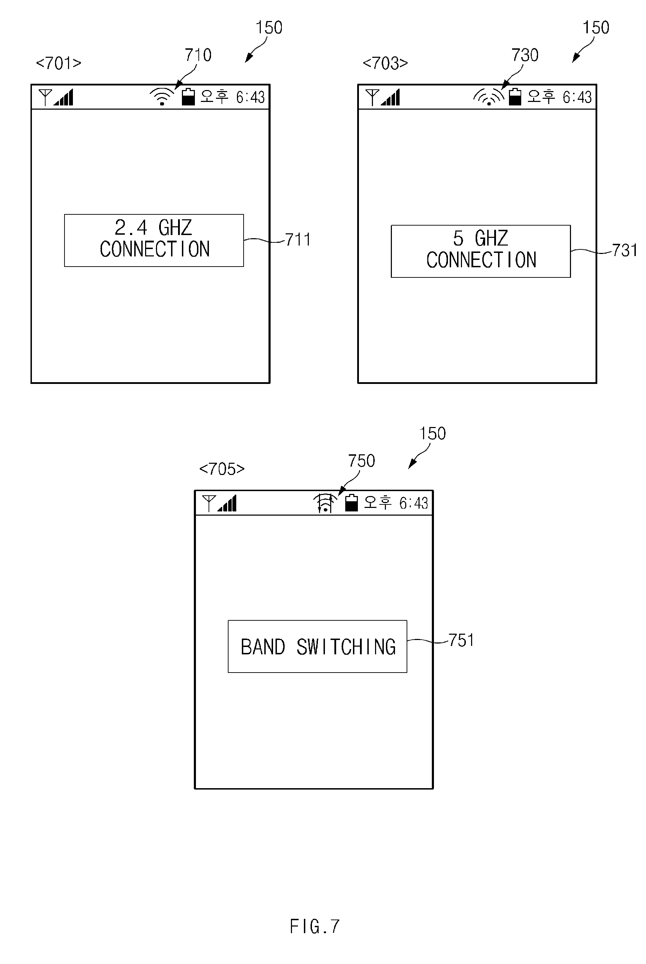

FIG. 7 is a view illustrating a communication channel management related screen interface according to various embodiments of the present disclosure.

Referring to FIG. 7, the electronic device 100 may activate the communication module 161 in correspondence to a wireless communication function activation request and perform a surrounding search. According to various embodiments of the present disclosure, the electronic device 100 may perform a surrounding search based on the communication module 162 according to a specified setting to determine whether there is a connectible second frequency band related access point. During this operation, if there is no connectible second frequency band related access point, the electronic device 100 may perform a surrounding search by activating the communication module 161.

If a connectible second frequency band related access point 200 is found based on the surrounding search result, the electronic device 100 may establish a first communication channel based on the communication module 161. Correspondingly, as shown in a state 701, the electronic device 100 may display on the display 150 notification information 711 guiding the establishment of a first communication channel (for example, 2.4 GHz based communication channel). According to various embodiments of the present disclosure, the electronic device 100 may output audio data corresponding to notification information 711 through an audio module of an input/output interface. According to an embodiment of the present disclosure, the electronic device 100 may output an indicator 710 corresponding to a first communication channel establishment to an indicator display area. The indicator 710 may be displayed based on at least one of a specified text and image indicating a first frequency band based communication channel.

When a wireless communication function activation request is received, the electronic device 100 may activate the communication module 162 according to a specified setting and perform a surrounding search. If a connectible second frequency band related access point 200 is found based on the surrounding search result, the electronic device 100 may establish a second communication channel based on the communication module 162. In relation to the second communication establishment, as shown in a state 703, the electronic device 100 may display on the display 150 notification information 731 guiding the establishment of a second communication channel (for example, 5 GHz based communication channel). According to various embodiments of the present disclosure, the electronic device 100 may output audio data corresponding to notification information 731 through an audio module of an input/output interface. The electronic device 100 may output at least one of the notification information 731 or audio data corresponding to the notification information 731 according to a setting. According to an embodiment of the present disclosure, the electronic device 100 may output an indicator 730 corresponding to a second communication channel establishment to an indicator display area. The indicator 730 may be displayed based on at least one of a specified text and image indicating a first frequency band based communication channel.

The electronic device 100 may perform a surrounding search based on the communication module 162 according to a specified period or an event while establishing a first communication channel based on the communication module 161. If there is a connectible access point based on the communication module 162, the electronic device 100 may determine whether a corresponding access point is the same access point. If the corresponding access point is the same access point, the electronic device 100 may process a second communication channel establishment based on the communication model 162. In relation to this, the electronic device 100, as shown in a state 705, may output channel switching notification information 751. Alternatively, the electronic device 100 may output audio data corresponding to the channel switching notification information 751. According to various embodiments of the present disclosure, the electronic device 100 may output an indicator 750 corresponding to a channel switching situation to an indicator area. When the second communication channel establishment is completed as a channel switching situation is terminated, the electronic device 100 may perform a control to remove the indicator 750 and output the indicator 730. During this operation, the electronic device 100 may output notification information 731. According to various embodiments of the present disclosure, the electronic device 100 may output at least one of icon, text (number or character), image, and emoticon corresponding to the notification information 731.

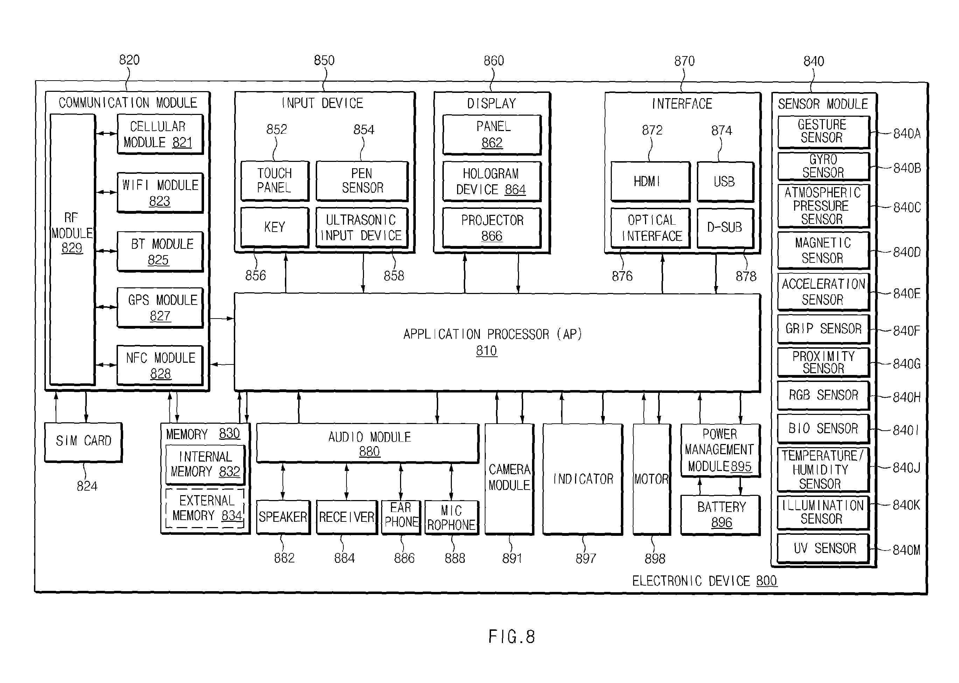

FIG. 8 is a view illustrating an electronic device relating to a communication channel management according to various embodiments of the present disclosure.

Referring to FIG. 8, an electronic device 800, for example, may configure all or part of the above-mentioned electronic device 100 shown in FIG. 2. The electronic device 800 may include an AP 810, a communication module 820, a subscriber identification module (SIM) card 824, a memory 830, a sensor module 840, an input device 850, a display 860, an interface 870, an audio module 880, a camera module 891, a power management module 895, a battery 896, an indicator 897, and a motor 898.

The AP 810 may control a plurality of hardware or software components connected to the AP 810 and also may perform various data processing and operations by executing an operating system or an application program. The AP 810 may be implemented with a system on chip (SoC), for example. According to an embodiment of the present disclosure, the AP 810 may further include a graphical processing unit (GPU) (not shown) and/or an image signal processor (ISP). The AP 810 may include at least part (for example, a cellular module 821) of components shown in FIG. 8. The AP 810 may load commands or data received from at least one of other components (for example, nonvolatile memory) and process them and may store various data in a nonvolatile memory.

The communication module 820 may have the same or similar configuration to the communication interface 160 of FIG. 2. The communication module 820 may include the cellular module 821, a Wi-Fi module 823, a BT module 825, a GPS module 827, a near field communication (NFC) module 828, and a radio frequency (RF) module 829.

The cellular module 821, for example, may provide a voice call, a video call, a text service, an Internet service, and the like, through a communication network. According to an embodiment of the present disclosure, the cellular module 821 may perform a distinction and authentication operation on an electronic device 801 in a communication network by using a SIM (for example, the SIM card 824). According to an embodiment of the present disclosure, the cellular module 821 may perform at least part of a function that the AP 810 provides. According to an embodiment of the present disclosure, the cellular module 821 may further include a CP.

Each of the Wi-Fi module 823, the BT module 825, the GPS module 827, and the NFC module 828 may include a processor for processing data transmitted/received through a corresponding module. According to an embodiment of the present disclosure, at least part (for example, at least one) of the cellular module 821, the Wi-Fi module 823, the BT module 825, the GPS module 827, and the NFC module 828 may be included in one integrated chip (IC) or IC package. Additionally, the Wi-Fi module 823 may include the first communication module 161, the second communication module 162, and the other communication module 163 and may process all related items by itself.

The RF module 829, for example, may transmit/receive communication signals (for example, RF signals). The RF module 829, for example, may include a transceiver, a power amp module (PAM), a frequency filter, a low noise amplifier (LNA), an antenna, and the like. According to an embodiment of the present disclosure, at least one of the cellular module 821, the Wi-Fi module 823, the BT module 825, the GPS module 827, and the NFC module 828 may transmit/receive RF signals through a separate RF module.

The SIM card 824 may include a card including a SIM and/or an embedded SIM and also may include unique identification information (for example, an integrated circuit card identifier (ICCID)) or subscriber information (for example, an international mobile subscriber identity (IMSI)).

The memory 830 (for example, the memory 130) may include an internal memory 832 or an external memory 834. The internal memory 832 may include at least one of a volatile memory (for example, a dynamic random access memory (DRAM), a static RAM (SRAM), a synchronous DRAM (SDRAM)) and a non-volatile memory (for example, a one-time programmable read only memory (OTPROM), a programmable ROM (PROM), an erasable and programmable ROM (EPROM), an electrically erasable and programmable ROM (EEPROM), a mask ROM, a flash ROM, a not and (NAND) flash memory, and a not or (NOR) flash memory).

The external memory 834 may further include a flash drive, for example, compact flash (CF), secure digital (SD), micro-SD, mini-SD, extreme digital (xD), a memory stick, and the like. The external memory 834 may be functionally and/or physically connected to the electronic device 801 through various interfaces.

The sensor module 840 measures physical quantities or detects an operating state of the electronic device 801, thereby converting the measured or detected information into electrical signals. The sensor module 840 may include at least one of a gesture sensor 840A, a gyro sensor 840B, a barometric pressure sensor 840C, a magnetic sensor 840D, an acceleration sensor 840E, a grip sensor 840F, a proximity sensor 840G, a color sensor 840H (for example, a red, green, blue (RGB) sensor), a biometric sensor 840I, a temperature/humidity sensor 840J, an illumination sensor 840K, and an ultra violet (UV) sensor 840M. Additionally or alternatively, the sensor module 840 may include an E-nose sensor, an electromyography (EMG) sensor, an electroencephalogram (EEG) sensor, an electrocardiogram (ECG) sensor, an infrared (IR) sensor, an iris sensor, a fingerprint sensor, and the like. The sensor module 840 may further include a control circuit for controlling at least one sensor therein. According to an embodiment of the present disclosure, the electronic device 801 may further include a processor configured to control the sensor module 840 as part of or separately from the AP 810 and thus may control the sensor module 840 while the AP 810 is in a sleep state.

The input device 850 may include a touch panel 852, a (digital) pen sensor 854, a key 856, or an ultrasonic input device 858. The touch panel 852 may use at least one of capacitive, resistive, infrared, or ultrasonic methods, for example. Additionally, the touch panel 852 may further include a control circuit. The touch panel 852 may further include a tactile layer to provide tactile response to a user.

The (digital) pen sensor 854, for example, may include a sheet for recognition as part of a touch panel or a separate sheet for recognition. The key 856, for example, may include a physical button, an optical key, a keypad, and the like. The ultrasonic input device 858 may determine data by detecting sound waves through a microphone (for example, a microphone 888) in the electronic device 801 through an input tool generating ultrasonic signals.

The display 860 (for example, the display 150) may include a panel 862, a hologram device 864, or a projector 866. The panel 862 may have the same or similar configuration to the display 150 of FIG. 2. For example, the panel 862 may be implemented to be flexible, transparent, wearable, and the like. The panel 862 and the touch panel 852 may be configured with one module. The hologram 864 may show three-dimensional images in the air by using the interference of light. The projector 866 may display an image by projecting light on a screen. The screen, for example, may be placed inside or outside the electronic device 801. According to an embodiment of the present disclosure, the display 860 may further include a control circuit for controlling the panel 862, the hologram device 864, or the projector 866.

The interface 870 may include, for example, an HDMI interface 872, a USB interface 874, an optical interface 876, or a D-subminiature (sub) 878. The interface 870, for example, may be included in the communication interface 160 shown in FIG. 2. Additionally or alternately, the interface 870 may include a mobile high-definition link (MHL) interface, an SD card/multi-media card (MMC) interface, or an infrared data association (IrDA) standard interface.

The audio module 880 may convert sound into electrical signals and convert electrical signals into sounds. At least some components of the audio module 880, for example, may be included in an input/output interface 140 shown in FIG. 2. The audio module 880 may process sound information inputted/outputted through a speaker 882, a receiver 884, an earphone 886, or a microphone 888.

The camera module 891, as a device for capturing a still image and a video, may include at least one image sensor (for example, a front sensor or a rear sensor), a lens (not shown), an ISP (not shown), or a flash (not shown) (for example, an LED or a xenon lamp).

The power management module 895 may manage the power of the electronic device 801. According to an embodiment of the present disclosure, the power management module 895 may include, for example, a power management IC (PMIC), a charger IC, or a battery or fuel gauge. The PMIC may have a wired and/or wireless charging method. As the wireless charging method, for example, there is a magnetic resonance method, a magnetic induction method, or an electromagnetic method. An additional circuit for wireless charging, for example, a circuit, such as a coil loop, a resonant circuit, a rectifier circuit, and the like, may be added. The battery gauge may measure the remaining amount of the battery 896, or a voltage, current, or temperature thereof during charging. The battery 896, for example, may include a rechargeable battery and/or a solar battery.

The indicator 897 may display a specific state of the electronic device 801 or part thereof (for example, the AP 810), for example, a booting state, a message state, a charging state, and the like. The motor 898 may convert electrical signals into mechanical vibration and may generate vibration or haptic effect. Although not shown in the drawings, the electronic device 801 may include a processing device (for example, a GPU) for mobile TV support. A processing device for mobile TV support may process media data according to the standards, such as digital multimedia broadcasting (DMB), digital video broadcasting (DVB), media flow, and the like.

Each of the above-mentioned components of the electronic device according to various embodiments of the present disclosure may be configured with at least one component and the name of a corresponding component may vary according to the kind of an electronic device. According to various embodiments of the present disclosure, an electronic device according to various embodiments of the present disclosure may include at least one of the above-mentioned components, may not include some of the above-mentioned components, or may further include another component. Additionally, some of components in an electronic device according to various embodiments of the present disclosure are configured as one entity, so that functions of previous corresponding components are performed identically.

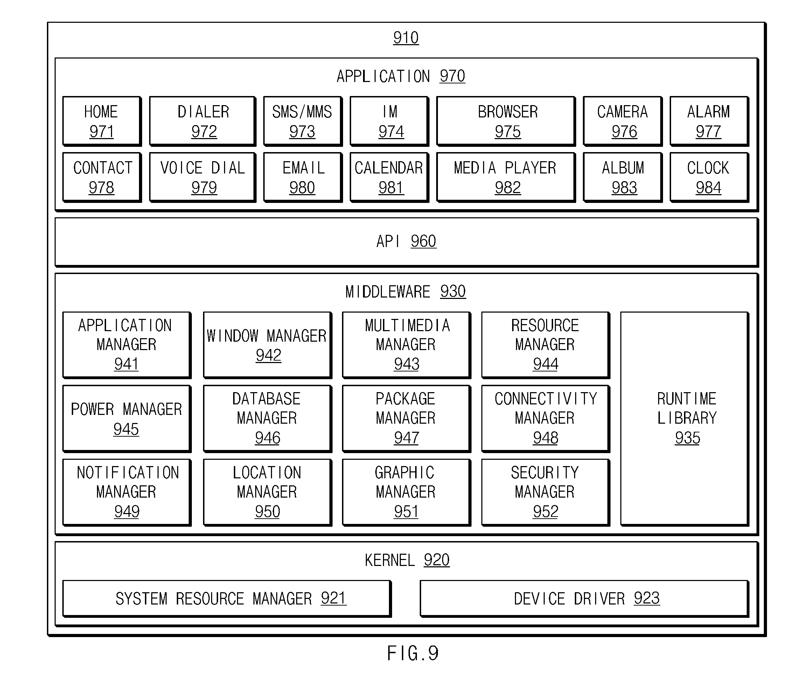

FIG. 9 is a block diagram illustrating a program module according to various embodiments of the present disclosure.

Referring to FIG. 9, according to an embodiment of the present disclosure, a program module 910 may include an OS for controlling a resource relating to an electronic device (for example, the electronic device 100) and/or various applications running on the OS. The OS, for example, may include Android, iOS, Windows, Symbian, Tizen, or Bada.

The program module 910 may include an OS and an application 970. The OS may include a kernel 920, a middleware 930, and an API 960. At least part of the program module 910 may be preloaded on an electronic device or may be downloaded from a server (for example, the server 104).

The kernel 920, for example, may include a system resource manager 921 or a device driver 923. The system resource manager 921 may perform the control, allocation, or retrieval of a system resource. According to an embodiment of the disclosure, the system resource manager 921 may include a process management unit, a memory management unit, a file system management unit, and the like. The device driver 923, for example, a display driver, a camera driver, a BT driver, a sharing memory driver, a USB driver, a keypad driver, a Wi-Fi driver, an audio driver, an inter-process communication (IPC) driver, and the like.

The middleware 930, for example, may provide a function that the application 970 requires commonly, or may provide various functions to the application 970 through the API 960 in order to allow the application 970 to efficiently use a limited system resource inside the electronic device. According to an embodiment of the disclosure, the middleware 930 may include at least one of a runtime library 935, an application manager 941, a window manager 942, a multimedia manager 943, a resource manager 944, a power manager 945, a database manager 946, a package manager 947, a connectivity manager 948, a notification manager 949, a location manager 950, a graphic manager 951, and a security manager 952.

The runtime library 935, for example, may include a library module that a complier uses to add a new function through a programming language while the application 970 is running. The runtime library 935 may perform a function on input/output management, memory management, an arithmetic function, and the like.

The application manager 941, for example, may mange the life cycle of at least one application among the applications 970. The window manager 942 may manage a graphical user interface (GUI) resource used in a screen. The multimedia manager 943 may recognize a format for playing various media files and may encode or decode a media file by using the codec corresponding to a corresponding format. The resource manager 944 may manage a resource, such as a source code, a memory, a storage space, and the like, of at least any one of the applications 970.

The power manager 945, for example, may operate together with a basic input/output system (BIOS) to manage the battery or power and may provide power information necessary for an operation of the electronic device. The database manager 946 may create, search, or modify a database used in at least one application among the applications 970. The package manager 947 may manage the installation or update of an application distributed in a package file format.

The connectivity manger 948 may manage a wireless connection, such as Wi-Fi or BT. The notification manager 949 may display or notify an event, such as arrival messages, appointments, and proximity alerts to a user in a manner of not interrupting the user. The location manager 950 may manage location information on an electronic device. The graphic manager 951 may manage a graphic effect to be provided to a user or a user interface relating thereto. The security manager 952 may provide various security functions necessary for system security or user authentication. According to an embodiment of the present disclosure, when an electronic device (for example, the electronic device 100) includes a phone function, the middleware 930 may further include a telephony manager for managing a voice or video call function of the electronic device.

The middleware 930 may include a middleware module for forming a combination of various functions of the above-mentioned components. The middleware 930 may provide a module specialized for each type of OS to provide differentiated functions. Additionally, the middleware 930 may delete part of existing components or add new components dynamically.

The API 960, for example, as a set of API programming functions, may be provided as another configuration according to OS. For example, in the case of Android or iOS, one API set may be provided for each platform and in the case of Tizen, at least two API sets may be provided for each platform.

The application 970 (for example, the application 38) may include at least one application for providing functions, such as a home 971, a dialer 972, a short message service (SMS)/multimedia message service (MMS) 973, an instant message 974, a browser 975, a camera 976, an alarm 977, a contact 978, a voice dial 979, an e-mail 980, a calendar 981, a media player 982, an album 983, a clock 984, health care (for example, measure an exercise amount or blood sugar), or environmental information provision (for example, provide air pressure, humidity, or temperature information).

According to an embodiment of the disclosure, the application 970 may include an application (hereinafter referred to as "information exchange application") for supporting information exchange between the electronic device (for example, the electronic device 100) and an external electronic device (for example, the external electronic device 102). The information exchange application, for example, may include a notification relay application for relaying specific information to the external device or a device management application for managing the external electronic device.

For example, the notification relay application may have a function for relaying to an external electronic device (for example, the external electronic device 102) notification information occurring from another application (for example, an SMS/MMS application, an e-mail application, a health care application, or an environmental information application) of the electronic device. Additionally, the notification relay application may receive notification information from an external electronic device and may then provide the received notification information to a user. The device management application, for example, may manage (for example, install, delete, or update) at least one function (turn-on/turn off of the external electronic device itself (or some components) or the brightness (or resolution) adjustment of a display) of an external electronic device (for example, the external electronic device 102) communicating with the electronic device, an application operating in the external electronic device, or a service (for example, call service or message service) provided from the external device.

According to an embodiment of the disclosure, the application 970 may include a specified application (for example, a health care application) according to the property (for example, as the property of an electronic device, when the type of the electronic device is a mobile medical device) of the external electronic device (for example, the external electronic device 102). According to an embodiment of the present disclosure, the application 970 may include an application received from an external electronic device (for example, the server device 104 or the external electronic device 102). According to an embodiment of the disclosure, the application 970 may include a preloaded application or a third party application downloadable from a server. The names of components in the program module 910 according to the shown embodiment may vary depending on the type of OS.

According to various embodiments of the present disclosure, at least part of the program module 910 may be implemented with software, firmware, hardware, or a combination thereof. At least part of the programming module 910, for example, may be implemented (for example, executed) by a processor (for example, the AP 810). At least part of the programming module 910 may include a module, a program, a routine, sets of instructions, or a process to perform at least one function, for example.

Various embodiments of the present disclosure support easy use of another communication channel in a communication environment providing various communication qualities.

Additionally, various embodiments of the present disclosure support switching to a communication channel of a relatively high communication quality through search while using a communication channel of a low communication quality.

The term "module" used in various embodiments of the present disclosure, for example, may mean a unit including a combination of at least one of hardware, software, and firmware. The term "module" and the term "unit", "logic", "logical block", "component", or "circuit" may be interchangeably used. A "module" may be a minimum unit or part of an integrally configured component. A "module" may be a minimum unit performing at least one function or part thereof. A "module" may be implemented mechanically or electronically. For example, "module" according to various embodiments of the present disclosure may include at least one of an application-specific IC (ASIC) chip performing certain operations, field-programmable gate arrays (FPGAs), or a programmable-logic device, all of which are known or to be developed in the future.

According to various embodiments of the present disclosure, at least part of a device (for example, modules or functions thereof) or a method (for example, operations) according to this disclosure, for example, as in a form of a programming module, may be implemented using an instruction stored in computer-readable storage media. When at least one processor (for example, the processor 90) executes an instruction, the at least one processor may perform a function corresponding to the instruction. The non-transitory computer-readable storage media may include the memory 130, for example.

Certain aspects of the present disclosure can also be embodied as computer readable code on a non-transitory computer readable recording medium. A non-transitory computer readable recording medium is any data storage device that can store data which can be thereafter read by a computer system. Examples of the non-transitory computer readable recording medium include a Read-Only Memory (ROM), a Random-Access Memory (RAM), Compact Disc-ROMs (CD-ROMs), magnetic tapes, floppy disks, and optical data storage devices. The non-transitory computer readable recording medium can also be distributed over network coupled computer systems so that the computer readable code is stored and executed in a distributed fashion. In addition, functional programs, code, and code segments for accomplishing the present disclosure can be easily construed by programmers skilled in the art to which the present disclosure pertains.

At this point it should be noted that the various embodiments of the present disclosure as described above typically involve the processing of input data and the generation of output data to some extent. This input data processing and output data generation may be implemented in hardware or software in combination with hardware. For example, specific electronic components may be employed in a mobile device or similar or related circuitry for implementing the functions associated with the various embodiments of the present disclosure as described above. Alternatively, one or more processors operating in accordance with stored instructions may implement the functions associated with the various embodiments of the present disclosure as described above. If such is the case, it is within the scope of the present disclosure that such instructions may be stored on one or more non-transitory processor readable mediums. Examples of the processor readable mediums include a ROM, a RAM, CD-ROMs, magnetic tapes, floppy disks, and optical data storage devices. The processor readable mediums can also be distributed over network coupled computer systems so that the instructions are stored and executed in a distributed fashion. In addition, functional computer programs, instructions, and instruction segments for accomplishing the present disclosure can be easily construed by programmers skilled in the art to which the present disclosure pertains.

As mentioned above, according to various embodiments of the present disclosure, a non-transitory computer readable recording medium stores at least one instruction executable by at least one processor. The instruction may be set to perform establishing a first communication channel with an access point based on a specified frequency band and establishing a second communication channel based on another frequency band that the access point supports by performing search according to a specified period or event for connection in another frequency band of the same access point while a first communication channel is established.

As mentioned above, according to various embodiments of the present disclosure, a non-transitory computer readable recording medium stores at least one instruction executable by at least one processor. The instruction may be set to perform establishing a first communication channel with an access point based on a specified frequency band, when the MAC address or SSID value of the access point establishing the first communication channel and the MAC address or SSID value of the access point of another frequency band have a similarity ratio of a specified value, determining the access points as the same access point, and establishing a second communication channel based on another frequency band that the same access point supports.

A module or a programming module according to various embodiments of the present disclosure may include at least one of the above-mentioned components, may not include some of the above-mentioned components, or may further include another component. Operations performed by a module, a programming module, or other components according to various embodiments of the present disclosure may be executed through a sequential, parallel, repetitive or heuristic method. Additionally, some operations may be executed in a different order or may be omitted. Alternatively, other operations may be added.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. An electronic device comprising:
a communication interface configured to support a plurality of channel bands; and
a processor configured to establish, while in a state of being connected through a first communication channel with an access point based on a specified frequency band, a second communication channel based on another frequency band that the access point supports according to a specified condition.

2. The electronic device of claim 1, wherein the processor is further configured to establish the second communication channel after a data transmission based on the first communication channel is completed.

3. The electronic device of claims 1 or 2, wherein the processor is further configured to:
change the first communication channel of a relatively low frequency band into the second communication channel of a relatively high frequency band, or
establish the first communication channel, while in a state of being connected through the second communication channel of the relatively high frequency band, if a performance of the second communication channel does not satisfy the specified condition.

4. The electronic device of any preceding claim, wherein the processor is further configured to:
establish a second communication channel based on a 5 GHz or 60 GHz band while in a state of being connected through a 2.4 GHz band based first communication channel, or
establish a first communication channel based on the 2.4 GHz band in correspondence to whether the specified condition is satisfied while in a state of being connected through a second communication channel based on the 5 GHz or 60GHz band.

5. The electronic device of any preceding claim, wherein the processor is further configured to output at least one of:
notification information corresponding to the first communication channel establishment,
notification information corresponding to the second communication channel establishment,
notification information corresponding to switching from the first communication channel to the second communication channel, or
notification information corresponding to switching from the second communication channel to the first communication channel.

6. The electronic device of any preceding claim, wherein the processor is further configured to output at least one of:
an indicator corresponding to the first communication channel establishment,
an indicator corresponding to the second communication channel establishment,
an indicator corresponding to switching from the first communication channel to the second communication channel, or
an indicator corresponding to switching from the second communication channel to the first communication channel.

7. The electronic device of any preceding claim, wherein the processor is further configured to:
determine whether a wireless signal reception intensity of the other frequency band satisfies the specified condition,
establish, when the specified condition is satisfied, the second communication channel,
maintain, when the specified condition is not satisfied, the first communication channel,
establish or maintain, while the second communication channel is connected, if the second communication channel does not satisfy the specified condition and the first communication channel satisfies the specified condition, the first communication channel, and
maintain, when the first communication channel does not satisfy the specified condition, the second communication channel.

8. The electronic device of any preceding claim, wherein, by comparing identification information of an access point connected through the first communication channel and identification information of a found access point of another frequency band, the processor is further configured to determine whether the access points are the same access point.

9. The electronic device of claim 8, wherein the processor is further configured to:
determine, when at least one of a media access control (MAC) address and a service set identifier (SSID) value of the access point and at least one of a MAC address and an SSID value of the access point of another frequency band have a similarity ratio of a specified value, the access points as the same access point,
determine the access points as the same access point by comparing device identifiers (IDs) of the access points, or
determine the access points as the same access point by comparing vendor specific fields in probe responses of the access points.

10. The electronic device of claim 8, wherein the processor is further configured to maintain the first communication channel when another frequency band of an access point is found.

11. A communication channel management method, the method comprising:
establishing a first communication channel with an access point based on a specified frequency band; and
establishing, while in a state of being connected through a first communication channel with the access point based on a specified frequency band, a second communication channel based on another frequency band that the access point supports according to a specified condition.

12. The method of claim 11, wherein the establishing of the second communication channel further comprises establishing the second communication channel after a data transmission based on the first communication channel is completed.

13. The method of claims 11 or 12, wherein the establishing of the second communication channel comprises:
changing a first communication channel of a relatively low frequency band into a second communication channel of a relatively high frequency band; or
establishing the first communication channel, in a state of the second communication channel of the relatively high frequency band is connected, if a performance of the second communication channel does not satisfy the specified condition.

14. A communication channel management method, the method comprising:
establishing a first communication channel with an access point based on a specified frequency band; and
determining, when at least one of a media access control (MAC) address and a service set identifier (SSID) value of the access point and at least one of a MAC address and an SSID value of an access point of another frequency band have a similarity ratio of a specified value, the access points as the same access point and establishing a second communication channel based on another frequency band that the same access point supports.

15. The method of claim 14, further comprising:
establishing, when a wireless signal reception intensity of the other frequency band satisfies a specified condition, the second communication channel, and maintaining, when the specified condition is not satisfied, the first communication channel; or
establishing or maintaining, while the second communication channel is established, if the second communication channel does not satisfy the specified condition and the first communication channel satisfies the specified condition, the first communication channel, and maintaining, when the first communication channel does not satisfy the specified condition, the second communication channel.
